# EUROPEAN PATENT SPECIFICATION

(11) **EP 0 899 848 B1**
(45) Date of publication and mention of the grant of the patent: **05.02.2003**
(21) Application number: 98660078.1
(22) Date of filing: 20.08.1998
(51) Int. Cl.: H02H 3/30, H02H 7/26

(54) **Protective relay arrangement for short-circuit and earth fault protection in an electricity distribution network**
Schutzrelaisanordnung zum Kurzschluss- und Fehlerstromschutz in einem elektrischen Verteilernetz
Relais pour la protection contre les court-circuits et les courants de défaut à la terre dans un réseau de distribution électrique

(30) Priority: 27.08.1997 FI 973527
(43) Date of publication of application: 03.03.1999
(73) Proprietor: ABB Oy, 00380 Helsinki (FI)
(72) Inventor: Kuisti, Harri, 65100 Vaasa (FI)
(74) Representative: Peltonen, Antti Sakari

(56) References cited:
- EP-A- 0 384 435
- EP-A- 0 666 629
- US-A- 4 275 429
- US-A- 5 267 231
- PATENT ABSTRACTS OF JAPAN vol. 013, no. 571 (E-862), 18 December 1989 & JP 01 238420 A (TOSHIBA CORP), 22 September 1989
- Developements of Integrated Protection and Control in Distribution Networks; Watson P; Gibbs J ; Leach J C ; Harrison B; 2nd Conference and Exhibition Protecting Electrical Networks and Quality of Supply'. Conference Proceedings (ERA 97-0172), Proceedings of 2nd Conference and Exhibition on Protec

## Description

The invention relates to a protective relay arrangement fir the short-circuit and earth fault protection in an electricity distribution network, the arrangement comprising at least two protective relays of the same substation, each adapted to monitor one or more physical variables, such as current and/or its phase angle, of an electricity distribution network line for detecting a short-circuit or earth fault on the line, and comprising means for measuring said physical variables, for comparing the measurement results with corresponding limit values, and, upon detection of a short-circuit or earth fault, for emitting control signals to separate the faulted line from the electricity distribution network.

A protective relay arrangement having the features of the preamble of claim 1 has become known from the article DEVELOPEMENTS of INTEGRATED PROTECTION and CONTROL in DISTRIBUTION NETWORKS.

Often so-called directional overcurrent relays are used in lines which can carry short-circuit power in both directions. These relays are based on the measurement of overcurrent and so-called polarizing voltage. The relay operates when the phase difference of the polarizing voltage and the overcurrent is within a given range, otherwise not. Usually one or more main voltages are used as polarizing voltages.

Parallel feeders and networks with several generators are examples of targets in which overcurrent relays are employed. In these cases information on the amplitude of the fault current alone is not sufficient as a basis of selective protection, but information is needed about the phase difference of the current and the polarizing voltage. Said phase difference depends, however, on the load current summed in the fault current, and the fault resistance. The information on the phase angle is rendered more ambiguous by the less than ideal measurement of current and voltage.

Another problem is associated with the operation time of the non-directional overcurrent relays of the first end of the parallel lines. The time has to be set long enough for the directional relays at the second end to have time to operate first. For numerical relays, a time marginal of 150 ms is typically used in definite time-delay operation, and 200 to 500 ms in inverse time-delay operation. It will consequently take several hundreds of milliseconds before both ends of a faulted feeder are separated from the network.

The operation of the relay at the first end of a line can be sped up by a higher overcurrent step. Should the fault current exceed a given level, the fault is definitely on the feeders, and the relay can operate immediately. With high fault resistance values, the current may, however, remain below the instantaneous tripping limit although the fault is indeed on the line. Another way to speed up protective operation is to position directional overcurrent relays at the first end of the line, too, the operation of the relays being locked, if need be, by the directional overcurrent relays at the second end of the lines. A locking instruction is transmitted if the relay at the second end concludes that the fault is behind the counter station. This kind of a solution is called longitudinal proportional protection, and it consequently requires a communications link between the ends of the line.

The same protection principles are also applicable to earth fault protection of networks earthed using a small resistance, since in these networks the earth fault currents can be of the magnitude of short-circuit currents. The same aspects as for short-circuit protection are also valid for the earth fault protection of networks earthed using a small resistance and consequently this type of protection has not been separately dealt with.

So-called directional earth fault relays are commonly used for earth fault protection in power supply networks having star points isolated from earth or earthed using so-called Petersen coils or a high resistance. Such relays are based on the measurement of zero voltage and zero current. Conventionally, each protection relay operates independently comparing the phase difference between zero voltage and the zero current of the line concerned. If the phase difference is within a given angle range, the relay releases the particular faulted line from the network.

A problem in conventional directional earth fault protection in networks earthed using the Petersen coil is the risk of non-selective operation if the network is significantly overcompensated. Overcompensation refers to the inductive current flowing through the Petersen coil in a fault situation being higher than the current flowing through the total earth capacitance of the network.

In an overcompensated network the phase difference between zero voltage and zero current can be of nearly the same size in a faulted and a healthy line. In order for the relay of the faulted line to operate, a very wide tripping range must be allowed for said phase difference. In this case the relay of the healthy line may, owing to measurement errors, conclude that said line is the faulted one and give an erroneous tripping.

Another problem is associated with double earth fault. Irrespective of whether a network is isolated from earth or earthed using a Petersen coil or a high resistance, it may be difficult to rapidly isolate from the network earth faults that occur simultaneously on two different lines and on different phase conductors.

If the fault resistances are high, earth fault currents may be so small that faulted lines cannot be identified on the basis of the magnitude of the current, and the directional earth fault relay has to perform the tripping. The short-circuit current component associated with the double earth fault may, however, cause the phase difference of zero current and voltage in another faulted line to be in a range where the relay does not work. This means that at first only one relay operates, and the fault then changes into a usual single-phase earth fault. Not until till then does the other relay work. The total protection operation time could in this case be double compared with a normal situation.

In short-circuit protection, many other conventional methods of protecting parallel lines are available in addition to said directional overcurrent protection. Line differential protection is a commonly used principle. In longitudinal line differential protection, the currents at the different ends of a line are compared in real time, whereas in transverse line differential protection the currents of parallel lines are compared. A difference in the currents indicates a fault on the line.

Another manner is to compare the currents and phase angles of different lines. The conclusion about a faulted line is made independently at both ends of the parallel line. This solution is known as transverse proportional protection and it resembles protection implemented by separate directional overcurrent relays. In both principles, both voltages and the currents of both lines are measured. The difference is that in transverse proportional protection one relay measures the currents of both lines.

Distance relays are also usual in protecting parallel lines. Often a pilot wire is employed between the ends of the line.

In a network comprising several generators, selective line protection can in principle be effected by non-directional inverse time-delay relays. Since the fault current is highest in the faulted line, the operation time of the relay of said line is shorter than that of the other relays.

As regards earth fault protection, Finnish patent application 924515 discloses a method of measuring the variables and phase angles of the zero currents of all lines in a substation in relation to a given reference voltage. Zero current phasors are generated for all lines on the basis of these measurements and added together as vectors. A faulted line is detected by comparing the directions of separate zero current phasors in the direction of the sum phasor.

In short-circuit protection, longitudinal and transverse proportional protection, longitudinal and transverse line differential protection, and distance relays provided with a pilot wire are very well suited for implementing selective parallel line protection. These solutions, however, require separate intercommunication between the relays. US Patent 4,408,246, for example, teaches a longitudinal differential protection solution in which the measurements of two different ends of the same line are compared by utilizing intercommunication. Said solution utilizes Kirchhoffs law, according to which the sum of currents measured at different ends of a line has to be zero if there is no fault on the line. In this solution the measurement results of both ends of a line or, when a multiple end line arrangement is involved, of all the ends of the line have to be available, i.e. have to arrive at the relays of all the other ends.

The implementation of the line protection of a multi-generator network by using non-directional inverse time-delay overcurrent relays is an inexpensive solution. Ensuring selectivity, however, forces to the use of long operation times.

As regards earth fault protection, the method known from Finnish patent application 924515 has the drawback that the zero current phasors of all lines are needed for detecting a faulted line. In practice such a solution leads to the need for a separate central unit for gathering information from all lines. High reliability requirements are set on data transmission, too, since the method does not work if the central unit loses the measurement result of one line. Consequently, either separate dedicated data transmission channels are needed, which is expensive, or the arrival of the messages has to be carefully ensured when using a common bus, leading to slower data transmission and a longer protection operating time.

Another weakness in said method is that it does not work in two-phase earth faults if the faults are on different lines. The short-circuit current component summed in the earth fault currents of faulted lines is not shown in the sum vector of zero currents, but it does affect the directions of the zero current phasors measured on the faulted lines. Thus the case may be that initially only one of the faulted lines is released.

It is the object of the present invention to provide a protective relay arrangement in which most of the above problems in known methods are avoided. This is achieved with the protective relay arrangement according to claim 1. Accordingly, in accordance with the invention it is sufficient that a relay receives information from at least one, any other relay of the arrangement, there being no need for reception or arrival of information concerning the other relays to achieve proper operation. This is based on the relay being able to conclude, on the basis of information received from one other relay, that the line connected thereto is not faulty. In other words, if the amplitudes and phase angles measured by one other relay are equal to the amplitude and phase angle measured by the relay itself, the relay can conclude that its own line is not faulty. If again the amplitudes and phase angles measured by two or more other relays are mutually equal, but distinctly different from the amplitude and phase angle measured by the relay itself, the relay can conclude that its own line is faulty.

When the protective relay arrangement of the invention is applied to short-circuit protection and when each protective relay comprises means for adjusting a directional or a non-directional overcurrent relay, it is advantageous for each protective relay to further comprise means for comparing the current amplitude values received from the other relays of the arrangement with the amplitude value of the current measured by said relay, and for emitting a control signal when the amplitude of the current as measured by said relay exceeds by a predetermined amount or is lower by a predetermined amount than the current amplitudes received from the other relays of the arrangement.

When the invention is applied to short-circuit protection of parallel lines and when each protective relay comprises means for adjusting a directional or non-directional overcurrent relay, it is advantageous for each protective relay to further comprise means for comparing the current phase angle values received from the other relays of the arrangement with the current phase angle value measured by said relay, and for emitting a control signal when the phase angles deviate one from another by at least a predetermined amount, or for preventing the operation of the overcurrent relay when the phase angles deviate one from another by less than a predetermined amount.

When the protective relay arrangement of the invention is applied to earth fault protection and each protective relay comprising means for adjusting a directional earth protection relay and for measuring a continuous zero current, it is advantageous for each protective relay to further comprise means for comparing the zero current and zero voltage measured by each relay with a predetermined current limit and correspondingly with a zero voltage change limit, and if either is exceeded, for transmitting the information supplied by the zero current phasor of said relay to the other relays of the arrangement, means for comparing the zero current phasors received from a predetermined. number of relays of the arrangement with the zero current phasor determined by said relay, and emitting a fault notification signal indicating the fact that the current of said relay or its phase deviates by a predetermined amount from the currents or phases received from the other protective relays to the other protective relays of the arrangement, and for emitting a control signal if a corresponding fault notification signal is not received from the other relays of the arrangement within a predetermined time.

A substation always comprises a field bus and the invention utilizes this field bus to transfer the fault current phasor data from one protective relay to another. When being able to communicate, the directional overcurrent relays in short-circuit protection can use each other's measurement results as an additional criterion for the tripping, resulting in more secure selectivity.

When relays communicate in earth fault protection with each other by transmitting to each other information about the variables and phase angles of the zero currents they have measured, additional conditions can be set on the operation of the protective relays, minimizing the occurrence of incorrect and slowed-down operation.

The solution also enables the earth fault protection to be sensitized. With high fault resistances the zero currents remain so small that owing to disturbances and measurement errors, reliable directional earth fault protection is impossible without communication between the relays. However, when the zero current phasors measured by the other relays can be utilized, reliable detection of a faulted line is possible with higher fault resistances.

The following is an example of a procedure used in short-circuit protection of parallel lines. Becoming operational, the non-directional overcurrent relays at the first ends of the lines transmit information to each other about the amplitudes of the phase currents measured. If a relay detects that the current it measured is distinctly higher than the measurement results of the other relays, it operates without delay. If the fault current of one relay is so small that it does not exceed the operating value, said relay transmits in any case information about the current it measured having first received a message from an operated relay.

In short-circuit protection of parallel generator outputs, the following is an exemplary procedure. Becoming operational, each overcurrent relay transmits to the other relays information about the amplitude of the fault current it measured. If the relay detects that the current it measured is distinctly higher than the current of the other outputs, it operates without delay. If the fault current of one line is so small that is does not exceed the operating value, said relay transmits in any case information about the current it measured having first received a message from an operated relay.

The directional relays of the second ends of the lines transmit to each other through the field bus information about the amplitudes and phase angles of the phase currents measured. If a relay detects that it has measured the same current phasors as the relay of another line, it concludes that the fault is not in said line and does not give a tripping even if for various reasons one or more phase current phasors happened to be in the tripping area. The similarity of the measured currents indicates that both lines are feeding a fault that is elsewhere.

If again the fault is in either of the lines, the interpretation of the current phasor data transmitted by one relay depends on the network behind the substation fed by the twin line. If this network comprises significant generator power, a notable amount of fault current flows to the faulted line even from this direction. In this case the relay at the second end of the faulted line measures a higher fault current amplitude than the relay at the second end of the healthy line, and this can be used as confirming information for the measurement result of the fault direction. Selective tripping can also be based on amplitude information alone, if it is sufficiently clear and if the direction of the current phasors is ambiguous.

If again there is only consumption behind the substation fed by the parallel lines, the amplitude of the current could be lower at the second end of the faulted line than at the second end of the healthy line. Thus, amplitude information must be interpreted in a different manner in this case.

Parallel lines may also be protected as follows. Each relay compares the phase angle of the current it measured with the phase angles of the currents measured by the other relays, and emits a control signal if said phase angle deviates by more than a predetermined amount from the phase angles measured by the other relays.

In a network comprising a plurality of lines feeding short-circuit power, transmitting amplitude data between relays facilitates the implementation of selective protection. The fault current is the sum of the fault currents of other network lines feeding short-circuit current in the faulted line, i.e. the fault current is highest in the faulted line. This information can be utilized as such or as a supplementary criterion for directional short-circuit protection.

For implementing the above supplementary criteria, the relay must comprise the following adjustments in addition to the conventional adjustments of a directional or non-directional overcurrent relay:

k₁: How much higher must the amplitude of the current measured by a relay be, compared with the amplitudes of the currents of the other system lines, in order for the line under observation to be declared faulted.

k₂: How much lower must the amplitude of the current measured by a relay be, compared with the amplitudes of the currents of the other system lines, in order for the line under observation to be declared faulted.

Δα₁: How high is the maximum deviation between the phase angles of the currents measured by the relays of parallel lines for the fault to be declared to be elsewhere and not on the line concerned.

Δα₂: How much must the phase angle of the current measured by a relay deviate from the phase angles of the currents measured by the other relays in order for the line to be declared faulted.

The realization of said criteria is studied separately for each phase current. The criteria defined by the parameters k₁, k₂ and Δα₂ are considered to be fulfilled if one phase current fulfils them. The criterion defined by the parameter Δα₁ is considered to be fulfilled only if all phase currents fulfil it.

In the protective relay arrangement of the invention, the field bus of the substation is utilized in earth fault protection for transferring zero current phasor data from one protective relay to another. The relay operates as normal directional earth fault protection and thus continuously measures the zero current. When the zero current exceeds a given preset limit, the relay transmits along the field bus information to the other relays about the zero current phasor it measured. The relay then waits for messages from the other relays. When n zero current phasor messages indicating that the zero current in other outputs is clearly in a different phase or distinctly lower, have arrived from the other relays, the protective relay concludes that its own line is faulted.

Before final tripping, the relay sends still another message. It informs the other protective relays that it has observed that the fault is on its own line and again waits for messages from the other relays. If it does not receive a similar message from the other relays, the relay makes the final conclusion that the fault is on its own line.

If again the relay receives m messages from the other relays indicating that the zero current on the other lines is approximately in the same phase, the relay concludes that the fault is elsewhere, not on its own line.

In addition to adjustments associated with conventional directional earth fault protection, the solution of the invention requires that the following adjustments be made in the relay:

lo: Zero current limit, upon exceeding of which the relay transmits information about the zero current phasor it measured to the other relays. This adjustment may be lower than the operating value of the lowest step of usual earth fault protection.

ΔUo: The change required in the zero current for the relay to transmit to the other relays information about the zero current phasor it measured.

n: How many sufficiently deviating measurement results concerning the zero current phasors have to be received from elsewhere before the relay concludes that the fault is on its own line. Two is the minimum number, and the maximum number is the number of outputs of the substation less one.

m: How many sufficiently identical measurement results concerning the zero current phasors have to be received from elsewhere before the relay concludes that the fault is not on its own line. Two is the minimum number, and the maximum number is the number of outputs of the substation less two.

Δβ: How much must the phase angles of the zero current phasors transmitted by the other relays deviate from the relay's own measurement in order for them to be interpreted sufficiently different. If the difference remains below this limit, the phase angles are concluded to be sufficiently identical.

p: How many times higher must the relay's own zero current measurement be, compared with the values transmitted by the other relays, for the relay to conclude that the zero current is distinctly highest at its own output.

In short-circuit protection, compared with conventional proportional protection, line differential protection and distance protection, directional and non-directional overcurrent relays provide a selective protection that can be arranged for parallel lines preferably by utilizing the field bus of the substation.

Compared with conventional overcurrent protection, communication between relays enables the selectivity of the protection to be improved, total operation time to be shortened and in some cases directional overcurrent protection to be replaced by a non-directional one.

In earth fault protection, no separate central unit is needed for collecting zero current information, the operation being decentralized to a plurality of relays, thus being a supplementary feature for complementing the normal directional earth fault protection in the relays.

Since all transmitted measurement information does not necessarily have to arrive in order for the entire protection to operate, the substation's common field bus can be utilized without any checks on the arrival of the data that would slow down the operation. No separate data transmission channels are needed for this purpose.

In many cases the solution enables both faulted lines of a double earth fault to be detected at the same time, resulting in shorter total operation time. The phase angle of the zero currents of the lines in the double earth fault depends on the fault resistances of both earth faults and their relationship which vary statistically. In the majority of cases the phase angles and/or amplitudes of the zero currents of both faulted lines distinctly deviate from the values of healthy feeders.

Since communication between relays in short-circuit protection is not initiated unless some overcurrent relay operates, this operation does not continuously load the field bus of the substation.

Communication between the relays does not completely remove the risk of non-selectivity associated with directional overcurrent protection. Both relays of the second end of a double line, for example, can erroneously in the same way conclude the direction of the fault, whereby they only intensity each other's faulty operation. Communication does not expressly cause non-selective operation; the same non-selectivity would be present also if the relays would operate entirely based on their own measurements.

Since communication between relays in earth fault protection is not initiated unless the zero current and the change in the zero current exceed a given level, this operation does not continuously load the field bus of the substation. The disadvantage is that the number of lines has to be sufficiently high for all the relays to be able to reliably compare the current phasors. With a small number of lines, a sufficient number of confirming messages may not arrive at the relay of the faulted feeder for it to operate. In this case the relay, however, operates as a usual directional earth fault protection.

In connection with short-circuit protection, in calculating phase current phasors, the phase angle and amplitude can be used at a particular instant after the fault has appeared. The instant when the main voltage that reduces the most, falls below a given limit, is chosen as the instant of the appearance of the fault. Since the main voltages are identical in different lines, the measurement results are thus rendered comparable.

The speed and capacity of the field bus dictate at how frequent intervals the relays transmit new measuring data to each other. This is also affected by how many relays are transmitting messages.

The minimum number is one measurement result per relay during failure. A practical maximum number can be considered to be the transmission of current phasor data once in a period. If the data transmission capacity of the field bus allows frequent transmission of measuring messages, it is possible to transmit new current phasor data when the measurement value varies considerably owing to the irregularity of the failure. For selectivity, this is naturally a better alternative than the transmission of one piece of measurement information only.

In connection with earth fault protection, in the calculation of zero current phasors, the phase angle and amplitude can be used at a given instant after the failure has appeared. The moment when zero voltage exceeds a given limit is selected as the instant the failure appeared. Since zero voltage is the same for all lines, this way the measurement results are rendered comparable.

A second way is to calculate the average value of the phasors within a given time period and to compare these average values.

A third way is to measure the maximum and minimum values of the phase angle and amplitude of a phasor within a given time period and calculate their average value.

The second and third ways are more immune to interference than the first way. The third way is more economic owing to lighter calculation.

The communication between relays enabled by the data transmission bus can also be used to implement control functions of the protection system. For example, each relay in the system can at regular intervals transmit information on the phase currents it has measured to a control device which adds up the currents. If the result deviates from zero by more than a predetermined amount, one of the measurements results is false or possibly totally missing because of device malfunction. The voltages measured by different protective relays can be compared in the same way. if they deviate from each other by more than a predetermined amount, the situation is interpreted as device malfunction. In both above cases the control device transmits to the operating personnel information on the protective relay failure it has observed.

In case of short-circuit or earth fault, the protective relays can transmit to the control device information about the currents or voltages they have measured and the control measures they have taken. It is advantageous for the control device to have the adjustments of the system relays in its memory. The control device then makes conclusions about the correctness of the operation of the protective relays and notifies the operating personnel if the operation of the relays corresponded to what had been predetermined. The fact that the control device monitors the operational status of the protective relays increases the reliability of the relay arrangement since possible protective relay failures are noticed and fixed, and unnecessary maintenance measures do not have to be taken if the control device confirms that the equipment is in good condition.

## Claims

1. A protective relay arrangement at a substation for earth fault protection of an electricity distribution network, the substation having a data transmission bus, such as a so-called field bus, the arrangement comprising
at least two protective relays of the same substation, each adapted to monitor physical variables, such as voltage, current and/or its phase angle, of an electricity distribution network line for detecting a earth fault on the line,
said protective relays comprising means for measuring said physical variables, for comparing the measurement results with corresponding limit values, and, upon detection of a earth fault, for emitting control signals to separate the faulted line from the electricity distribution network, means for transmitting the measurement results or information derived therefrom through the data transmission bus to the other relays of the arrangement, means for receiving these measurement results or information derived therefrom from at least one, any other relay of the arrangement, and for using them when making a decision to emit a control signal, and means for adjusting a directional earth contact protective relay and for continuous measurement of the zero current, **characterized in that** each protective relay further comprises
means for comparing a measured zero current and zero voltage with a predetermined current limit and correspondingly with a zero voltage change limit, and if either is exceeded, for transmitting the information supplied by a zero current phasor of the respective relay to the other relays of the arrangement, and
means for comparing the zero current phasors received from a predetermined number of relays of the arrangement with the zero current phasor determined by said relay, for emitting a fault notification signal indicating the fact that the current of said relay or its phase deviates by a predetermined amount from the currents or phases received from the other protective relays to the other protective relays of the arrangement, and for emitting a control signal if a corresponding fault notification signal is not received from the other relays of the arrangement within a predetermined time.

2. A protective relay arrangement as claimed in claim 1, **characterized in that** each relay comprises means for preventing the operation of its directional earth fault protection when the phase angles received from a predetermined number of relays of the arrangement deviate one from another by less than a predetermined amount from the phase angles of the zero current measured by said relay.

## Patentansprüche

1. Schutzrelaisanordnung an einer Unterstation zum Fehlerstromschutz eines elektrischen Verteilernetzes, wobei die Unterstation einen Datenübertragungsbus wie einen sogenannten Feldbus hat, wobei die Anordnung wenigstens zwei Schutzrelais derselben Unterstation hat, die jeweils geeignet sind, physikalische Variable wie Spannung, Strom und/oder deren Phasenwinkel einer Verteilernetzleitung zu überwachen, um einen Fehlerstrom in der Leitung zu erfassen,
wobei die Schutzrelais Mittel zum Messen der physikalischen Variablen, zum Vergleichen der Messergebnisse mit entsprechenden Grenzwerten und, bei Erfassung eines Fehlerstroms, zum Senden von Steuersignalen zum Abtrennen der fehlerhaften Leitung von dem elektrischen Verteilernetz, Mittel zum Übertragen der Messergebnisse oder davon abgeleiteter Informationen durch den Datenübertragungsbus zu den anderen Relais der Anordnung, Mittel zum Empfangen dieser Messergebnisse oder davon abgeleiteter Informationen von wenigstens einem anderen Relais der Anordnung und zu deren Benutzung, wenn eine Entscheidung getroffen wird, ein Steuersignal zu senden, und Mittel zum Einstellen eines Richtungserdungsschutzrelais und zum fortlaufenden Messen des Nullstroms aufweist,
**dadurch gekennzeichnet,**
**dass** jedes Schutzrelais ferner
Mittel zum Vergleichen eines gemessenen Nullstroms und einer gemessenen Nullspannung mit einem vorbestimmten Stromgrenzwert und entsprechend mit einem zugehörigen Nullspannungänderungsgrenzwert und, wenn einer überschritten ist, zum Übertragen der von einem Nullstromphasor des entsprechenden Relais gelieferten Information zu den anderen Relais der Anordnung und
Mittel zum Vergleichen der Nullstromphasors, die von einer vorbestinimten Anzahl von Relais der Anordnung empfangen sind, mit dem Nullstromphasor, der durch das Relais bestimmt ist, zum Senden eines Fehleranzeigesignals, das anzeigt, dass der Strom von dem Relais oder dessen Phase um eine vorbestimmte Größe von den Strömen oder Phasen abweichen, die von den anderen Schutzrelais empfangen sind, zu den anderen Schutzrelais der Anordnung, und zum Senden eines Steuersignals, wenn ein zugehöriges Fehleranzeigesignal von den anderen Relais der Anordnung innerhalb einer vorbestimmten Zeitspanne nicht empfangen wird.

2. Schutzrelaisanordnung nach Anspruch 1,
**dadurch gekennzeichnet,**
**dass** jedes Relais Mittel zur Verhinderung der Betätigung seines Richtungsfehlerstromschutzes aufweist, wenn die Phasenwinkel, die von einer vorbestimmten Anzahl von Relais der Anordnung erhalten werden, voneinander um weniger als eine vorbestimmte Größe von den Phasenwinkeln des Nullstroms abweichen, der von dem Relais gemessen ist.

## Revendications

1. Agencement de relais de protection au niveau d'une station secondaire pour la protection contre les défauts à la terre d'un réseau de distribution d'électricité, la station secondaire comportant un bus de transmission de données, tel qu'un bus dit de site, l'agencement comprenant :
au moins deux relais de protection de la même station secondaire, adaptés chacun pour surveiller des variables physiques, telles qu'une tension, un courant et/ou son angle de phase, d'une ligne de réseau de distribution d'électricité pour détecter un défaut à la terre sur la ligne,
lesdits relais de protection comprenant des moyens pour mesurer lesdites variables physiques, pour comparer les résultats de mesure avec des valeurs limites correspondantes et, lors de la détection d'un défaut à la terre, pour émettre des signaux de commande afin de séparer la ligne en défaut du réseau de distribution d'électricité, des moyens pour transmettre les résultats de mesure ou les informations déduites de ceux-ci par l'intermédiaire du bus de transmission de données aux autres relais de l'agencement, des moyens pour recevoir ces résultats de mesure ou les informations déduites de ceux-ci depuis au moins un autre relais quelconque de l'agencement et pour les utiliser pour prendre une décision d'émettre un signal de commande, et des moyens pour ajuster un relais de protection contre un contact avec la terre directionnel et
pour la mesure continue du courant nul, **caractérisé en ce que** chaque relais de protection comprend en outre :
des moyens pour comparer un courant nul et une tension nulle mesurés avec une limite de courant prédéterminée et, en conséquence, avec une limite de variation de tension nulle et, si l'une ou l'autre est dépassée, pour transmettre les informations délivrées par un phaseur de courant nul du relais respectif aux autres relais de l'agencement, et
des moyens pour comparer les phaseurs de courant nul reçus d'un nombre prédéterminé de relais de l'agencement avec le phaseur de courant nul déterminé par ledit relais, pour émettre un signal de notification de défaut indiquant le fait que le courant dudit relais ou sa phase s'écarte d'une quantité prédéterminée des courants ou des phases reçus des autres relais de protection vers les autres relais de protection de l'agencement, et pour émettre un signal de commande si un signal de notification de défaut correspondant n'est pas reçu des autres relais de l'agencement dans un temps prédéterminé.

2. Agencement de relais de protection selon la revendication 1, **caractérisé en ce que** chaque relais comprend des moyens pour empêcher le fonctionnement de sa protection contre un défaut à la terre directionnel lorsque les angles de phase reçus d'un nombre prédéterminé de relais de l'agencement s'écartent les uns des autres d'une quantité inférieure à une quantité prédéterminée par rapport aux angles de phase du courant nul mesuré par ledit relais.
